# FASCICULE DE BREVET EUROPEEN

(11) **EP 1 489 713 B1**
(45) Date de publication et mention de la délivrance du brevet: **17.06.2009**
(21) Numéro de dépôt: 04102323.5
(22) Date de dépôt: 26.05.2004
(51) Int. Cl.: H02G 3/08, H02G 3/22

(54) **Dispositif de traversée étanche de paroi**
Dichte Wanddurchführungsvorrichtung
Sealed lead-through device

(30) Priorité: 17.06.2003 FR 0307256
(43) Date de publication de la demande: 22.12.2004
(73) Titulaire: Schneider Electric Industries SAS, 92500 Rueil-Malmaison (FR)
(72) Inventeur: Guinebert, Patrick, 67260 Siltzheim (FR); Bouet, Emmanuel, 67200 Sarre Union (FR); Buchy, Bernard, 67320 Schoenbourg (FR); Meyer, Valentin, 57412 Schmittviller (FR)

(56) Documents cités:
- EP-A- 0 731 000
- EP-A- 1 089 411
- US-A- 6 088 876

## Description

La présente invention se rapporte à un dispositif de traversée de paroi pour câbles ou conduits, notamment pour câbles électriques souples, prévu pour être monté de façon étanche dans une ouverture circulaire de la paroi. Une telle paroi appartient par exemple à une enveloppe d'équipement électrique, telle qu'un coffret, ou une boîte de raccordement ou de dérivation.

Le document EP1089411 décrit un dispositif destiné à être traversé de façon étanche par un câble électrique ou un conduit. Le dispositif comporte notamment une gorge destinée à recevoir une cloison et au fond de laquelle est réalisée une saillie s'appliquant fortement sur la cloison pour améliorer l'étanchéité.
Le document US6088876 décrit également un dispositif de traversée de paroi pour câbles ou conduits. Ce dispositif comporte notamment plusieurs bourrelets concentriques venant s'appliquer sur la face interne de la paroi.
Le document FR 2 150 580 montre un dispositif de traversée de paroi qui comporte un bouchon de contour circulaire. Ce bouchon est doté extérieurement d'une gorge qui s'encastre dans l'ouverture, et intérieurement d'un passage pour un câble. Le bouchon se compose de plusieurs anneaux sécables formant vers le passage autant de lèvres annulaires de diamètres différents, applicables chacune élastiquement contre un câble de diamètre correspondant ; on sélectionne la lèvre de diamètre voulu en découpant le bouchon pour éliminer l'anneau ou les anneaux de plus petit diamètre. Il est ainsi possible de faire traverser une paroi, dotée d'une ouverture de diamètre déterminé et non modifiable, par des câbles de diamètres très variables.

Une parfaite étanchéité doit être assurée d'une part entre le bouchon et la paroi, d'autre part entre les diverses lèvres annulaires et les câbles respectifs, quel que soit leur diamètre. Une telle étanchéité doit parfois aussi rester assurée de manière satisfaisante lorsque se manifestent de légères variations d'épaisseur de la paroi de montage. Or le problème est imparfaitement résolu par les solutions techniques actuellement disponibles.

L'invention, telle que définie dans la revendication 1, a pour but de réaliser un dispositif de traversée de paroi pour câbles de divers diamètres, offrant une excellente étanchéité entre le bouchon et la paroi, et entre le bouchon et les différents câbles.

D'autres caractéristiques du dispositif conforme à l'invention sont énoncées dans les revendications 2 à 4.

Selon l'invention, dans un dispositif du type décrit, le bouchon présente une surface sensiblement plane applicable contre une face externe de la paroi située autour de l'ouverture, laquelle face est pourvue d'au moins deux nervures d'étanchéité annulaires concentriques, et la gorge a un fond dont une partie est évasée du côté interne de la paroi, avec une pente telle qu'elle contribue à l'application des nervures contre la face externe de la paroi.

De la sorte, le fond évasé permet un rattrapage du jeu entre la paroi et le bouchon, et par conséquent le montage du bouchon sur des parois d'épaisseur variable, car il conserve une mise en pression des nervures d'étanchéité contre la paroi.

Les nervures d'étanchéité applicables contre la face externe de la paroi sont avantageusement orientées radialement vers l'extérieur de l'ouverture, de façon à définir entre elles un espace de décompression et à se déformer radialement vers l'extérieur au montage.

On peut prévoir plusieurs lèvres destinées à s'appliquer contre des câbles de diamètres différents. Ces lèvres sont alors de forme générale tronconique et font partie de tranches concentriques défonçables ou sécables. Selon l'invention, elles sont disposées de manière que la pression radiale exercée par le câble sur les lèvres conforte l'application des nervures d'étanchéité contre la face externe de la paroi.

Le bouchon peut présenter, au niveau de la gorge et vers l'intérieur, un bourrelet annulaire interne en saillie dans le passage pour loger un câble de grande section, après découpe préalable des tranches sécables faisant apparaître une arête d'entrée du passage. La géométrie du bouchon et le bourrelet interne sont tels que l'introduction du câble de grande section entraîne l'application de l'arête d'entrée sur le câble en conservant l'application des nervures d'étanchéité sur la face externe entourant l'ouverture.

D'autres caractéristiques et avantages vont apparaître dans la description détaillée qui suit, avec référence à un mode de réalisation donné à titre d'exemple et représenté par les dessins annexés.
La figure 1 représente en coupe un dispositif conforme à l'invention permettant la traversée étanche d'une paroi de boîte.
La figure 2 est une vue similaire montrant l'insertion d'un câble de section petite ou moyenne.
La figure 3 est une vue similaire montrant l'insertion d'un câble de grande section.
La figure 4 illustre en perspective le bouchon du dispositif de la figure 1.
La figure 5 est une vue en coupe, correspondant à la figure 1, du bouchon seul.

Le dispositif de traversée illustré sur les figues comprend une paroi plane rigide 1 qui est dotée d'une ouverture circulaire 2, et un bouchon 10 en matière souple qui se loge dans l'ouverture. La paroi 1 s'étend parallèlement à un plan P et l'ouverture a un axe X orthogonal à P. Le bouchon 10, destiné à s'encastrer dans l'ouverture 2, comprend un corps 11 formant un passage interne 12, ainsi qu'une partie d'entrée 13 raccordée au corps ; la partie d'entrée 13 se compose de plusieurs zones défonçables ou sécables. En posant que la paroi, ou l'enveloppe E présentant cette paroi, a un côté interne et un côté externe, la paroi 1 présente une face externe 3 sur laquelle on va revenir par la suite.

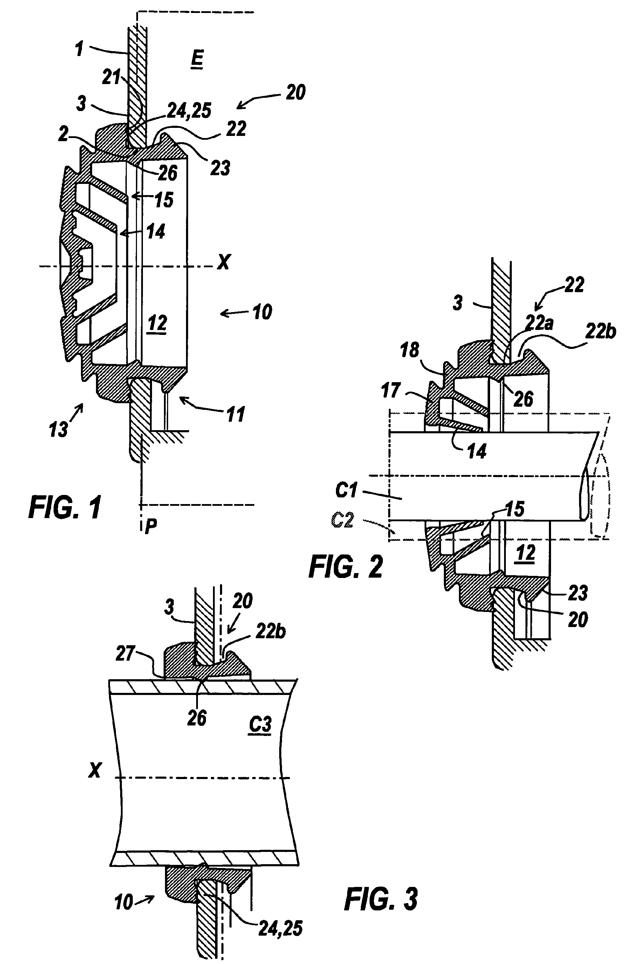

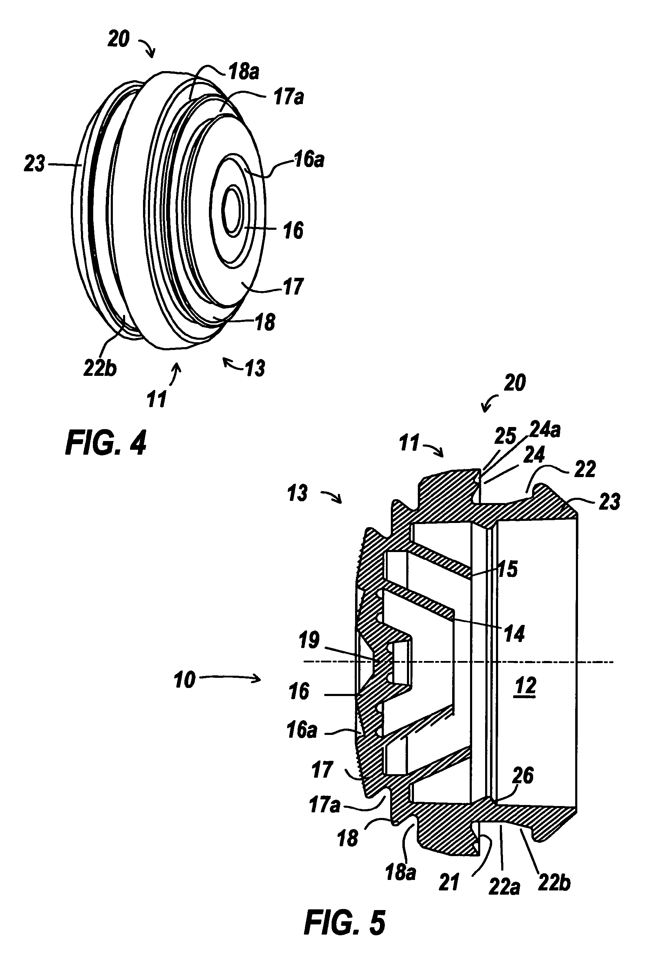

Comme indiqué figure 2, la partie d'entrée du bouchon - située du côté externe de la paroi - comprend deux (ou plus) lèvres de forme générale tronconique 14,15, destinées à assurer l'étanchéité avec des câbles de diamètres petits et respectivement moyens. La partie d'entrée se compose ainsi de galettes sécables, à savoir une galette centrale 16, dont la partie centrale 19 est elle-même défonçable, ainsi qu'une galette moyenne 17 et une galette extérieure 18, avec faculté de séparation au diamètre sélectionné par des zones annulaires affaiblies 16a, 17a, 18a (voir figure 5).

Le corps 11 du bouchon possède une gorge tronconique 20. La gorge 20 s'ouvre radialement vers l'extérieur par rapport à l'axe X et est bordée latéralement par une face sensiblement plane 21 applicable, comme décrit ci-après, par des nervures contre la face externe 3 de la paroi. Le fond 22 de la gorge 20 a une surface en partie cylindrique 22a et en partie inclinée 22b (voir figure 5). La partie inclinée 22b du fond de la gorge s'évase vers l'intérieur de l'enveloppe, et elle est réalisée notamment sous forme tronconique. Le bouchon présente, du côté intérieur de l'enveloppe, un bourrelet 23 à pente opposée à celle de la partie 22b du fond 22.

Selon l'invention, la face 21 est dotée de deux (ou plus de deux) nervures d'étanchéité 24,25 qui, en combinaison avec la forme du fond 22 de la gorge 20, procurent l'étanchéité recherchée entre le bouchon et la paroi de l'enveloppe. Il convient d'observer que les nervures 24,25 définissent entre elles un espace de décompression 24a et sont orientées vers la face 3 en s'éloignant radialement du centre de l'ouverture 2. Quand le bouchon est inséré dans l'ouverture, les nervures 24,25 se déforment ainsi vers l'extérieur. Un bourrelet d'étanchéité 26 est enfin formé à l'intérieur du passage 12.

Le dispositif décrit se monte et fonctionne de la manière suivante.
Le bouchon 10 est introduit axialement dans l'ouverture par glissement du bourrelet 23 contre l'arête externe de l'ouverture 2, puis la gorge 20 est engagée contre la surface intérieure de l'ouverture, tandis que les nervures 24,25 s'appliquent contre la face 3 de la paroi 1 avec effet d'écrasement centrifuge. La partie tronconique 22b tend à favoriser l'application des nervures contre la paroi et à adapter le bouchon à des épaisseurs de paroi légèrement différentes, comme indiqué en tirets sur la figure 3.

Pour insérer un câble de petit diamètre C1 (en traits pleins figure 2), on ôte la galette centrale 16 en découpant la partie d'entrée 12 au niveau de la zone affaiblie 16a. Le câble peut alors être engagé en mettant en contrainte la lèvre 14. Pour insérer un câble de diamètre moyen C2 (en tirets grisés figure 2), on ôte la galette moyenne 17 en découpant la partie 12 selon la zone affaiblie 17a et c'est alors la lèvre 15 qui est fléchie par le câble C2 et en assure la traversée étanche.

Pour insérer un câble de grand diamètre C3 (figure 3), la partie d'entrée est découpée selon la zone affaiblie 18a, ce qui dégage, du côté externe du bouchon, et radialement vers l'intérieur du passage 12, une arête frontale 27. Le câble C3 est alors engagé de manière étanche contre la nervure interne 26.De plus, on observe que la forme géométrique du corps du bouchon est telle que celui-ci est rétreint sur le câble au niveau de l'arête 27 pour accentuer l'étanchéité bouchon/câble, tandis que les nervures 24,25 continuent d'être pressées sur la face plane 3.

Le bouchon décrit assure ainsi, avec des câbles de diamètres très différents et des épaisseurs de paroi non constantes, une application étanche et fiable du bouchon contre la paroi et une insertion étanche du câble dans le passage variable du bouchon.

## Revendications

1. Dispositif de traversée de paroi pour câbles ou conduits, prévu pour être monté de façon étanche dans une ouverture circulaire (2) de la paroi (1), la paroi comportant une face externe (3) et une face interne opposée à la face externe (3), et consistant en un bouchon (10) de contour circulaire doté extérieurement d'une gorge (20) d'encastrement dans l'ouverture, et intérieurement d'un passage (12) pour un câble et d'au moins une lèvre (14,15) en saillie dans ce passage pour s'appliquer élastiquement contre le câble,
le bouchon (10) présentant une face (21) sensiblement plane applicable contre la face externe (3) de la paroi (1) située autour de l'ouverture, ***caractérisé en ce que***
- ladite face (21) est pourvue d'au moins deux nervures d'étanchéité (24,25) annulaires concentriques,
- la gorge (20) a un fond (22) dont une partie est évasée du côté de la face interne de la paroi, avec une pente telle qu'elle contribue à l'application des nervures (24,25) contre la face externe (3) de la paroi.

2. Dispositif selon la revendication 1, **caractérisé en ce que** les nervures d'étanchéité (24,25), qui définissent entre elles un espace de décompression (24a), sont orientées radialement vers l'extérieur de l'ouverture (2), de façon à se déformer radialement vers l'extérieur au montage.

3. Dispositif selon la revendication 1, **caractérisé en ce qu'**il comprend plusieurs lèvres (14,15) applicables contre des câbles de diamètres différents, ces lèvres étant de forme générale tronconique et faisant partie de tranches concentriques sécables (17,18), et **en ce que** les lèvres(14,15) sont disposées de manière que la pression radiale du câble (C1,C2) sur la lèvre respective conforte l'application des nervures d'étanchéité (24,25) contre la face externe (3) de la paroi.

4. Dispositif selon la revendication 3, **caractérisé en ce que** le bouchon (10) présente, au niveau de la gorge (20) et vers l'intérieur, un bourrelet annulaire interne (26) en saillie dans le passage (12) et contre lequel est applicable un câble de grande section (C3), après découpe préalable d'une tranche sécable faisant apparaître une arête (27) d'entrée du passage, la géométrie du bouchon et le bourrelet interne étant tels que l'introduction du câble entraîne l'application de l'arête d'entrée (27) sur le câble (C3) en conservant l'application des nervures d'étanchéité (24, 25) sur la face externe (3) entourant l'ouverture.

## Claims

1. Wall-piercing device for cables or ducts, designed to be mounted in a sealed manner in a circular opening (2) of the wall (1), the wall comprising an outer face (3) and an inner face opposite to the outer face (3), and consisting in a plug (10) of circular contour provided externally with a groove (20) for flush-fitting in the opening, and internally with a passageway (12) for a cable and with at least one lip (14, 15) protruding into this passageway in order to be pressed elastically against the cable, the plug (10) having a substantially flat face (21) that can be pressed against the outer face (3) of the wall (1) situated around the opening, **characterized in that** the said face (21) is provided with at least two concentric annular sealing ribs (24, 25), the groove (20) has a bottom (22) a portion of which is tapered on the side of the inner face of the wall, with a slope such that it contributes to the pressing of the ribs (24, 25) against the outer face (3) of the wall.

2. Device according to Claim 1, **characterized in that** the sealing ribs (24, 25), which, between them, define a decompression space (24a), are oriented radially towards the outside of the opening (2), so as to deform radially outwards on installation.

3. Device according to Claim 1, **characterized in that** it comprises several lips (14, 15) that can be pressed against cables of different diameters, these lips being of generally frustoconical shape and forming part of breakable concentric sections (17, 18), and **in that** the lips (14, 15) are placed so that the radial pressure of the cable (C1, C2) on the respective lip reinforces the pressure of the sealing ribs (24, 25) against the outer face (3) of the wall.

4. Device according to Claim 3, **characterized in that** the plug (10) has, at the groove (20) and towards the inside, an inner annular flange (26) which protrudes into the passageway (12) and against which a large-section cable (C3)can be pressed, after a breakable section has first been cut causing the appearance of a passageway-entrance ridge (27), the geometry of the plug and the inner flange being such that the insertion of the cable causes the entrance ridge (27) to press on the cable (C3) while maintaining the pressure of the sealing ribs (24, 25) on the outer face (3) surrounding the opening.

## Patentansprüche

1. Wanddurchführungsvorrichtung für Kabel oder Rohrleitungen, die vorgesehen ist, um dicht in eine kreisförmige Öffnung (2) der Wand (1) montiert zu werden, wobei die Wand eine Außenseite (3) und eine der Außenseite (3) gegenüberliegende Innenseite aufweist, und aus einem Verschlussdeckel (10) mit kreisförmigem Umriss besteht, der außen mit einer Rille (20) zum Einbau in die Öffnung und innen mit einem Durchlass (12) für ein Kabel und mit mindestens einer Lippe (14, 15) versehen ist, die in diesen Durchlass vorsteht, um sich elastisch gegen das Kabel anzulegen,
wobei der Verschlussdeckel (10) eine im Wesentlichen ebene Seite (21) aufweist, die gegen die Außenseite (3) der Wand (1) angelegt werden kann, die sich um die Öffnung herum befindet,
**dadurch gekennzeichnet, dass** die Seite (21) mit mindestens zwei konzentrischen ringförmigen Dichtrippen (24, 25) versehen ist,
die Rille (20) einen Boden (22) hat, von dem ein Teil auf der Seite der Innenseite der Wand mit einer solchen Neigung ausgeweitet ist, dass sie zum Anlegen der Rippen (24, 25) gegen die Außenseite (3) der Wand beiträgt.

2. Vorrichtung nach Anspruch 1, **dadurch gekennzeichnet, dass** die Dichtrippen (24, 25), die zwischen sich einen Druckentlastungsraum (24a) definieren, radial zur Außenseite der Öffnung (2) ausgerichtet sind, um sich bei der Montage radial nach außen zu verformen.

3. Vorrichtung nach Anspruch 1, **dadurch gekennzeichnet, dass** sie mehrere Lippen (14, 15) aufweist, die gegen Kabel verschiedener Durchmesser angelegt werden können, wobei diese Lippen eine allgemeine Kegelstumpfform haben und Teil von konzentrischen trennbaren Teilabschnitten (17, 18) sind, und dass die Lippen (14, 15) so angeordnet sind, dass der radiale Druck des Kabels (C1, C2) auf die jeweilige Lippe das Auflegen der Dichtrippen (24, 25) gegen die Außenseite (3) der Wand stärkt.

4. Vorrichtung nach Anspruch 3, **dadurch gekennzeichnet, dass** der Verschlussdeckel (10) in Höhe der Rille (20) und nach innen einen inneren ringförmigen Wulst (26) aufweist, der in den Durchlass (12) vorsteht und gegen den ein Kabel großen Durchmessers (C3) nach vorherigem Abschneiden eines trennbaren Teilabschnitts angelegt werden kann, das eine Eingangskante (27) des Durchlasses auftreten lässt, wobei die Geometrie des Verschlussdeckels und der innere Wulst derart sind, dass das Einführen des Kabels zum Auflegen der Eingangskante (27) auf das Kabel (C3) unter Beibehaltung der Auflage der Dichtrippen (24, 25) auf der die Öffnung umgebenden Außenseite (3) bewirkt.
